# EUROPEAN PATENT APPLICATION

(11) **EP 4 653 351 A1**
(43) Date of publication of application: **26.11.2025**
(21) Application number: 24744689.1
(22) Date of filing: 18.01.2024
(51) Int. Cl.: B65G 47/84, B29C 49/42, B65G 54/02

(54) **CONTAINER TRANSPORTATION DEVICE, CONTAINER TRANSPORTATION METHOD, AND BLOW MOLDING DEVICE**

(30) Priority: 19.01.2023 JP 2023006510
(71) Applicant: Nissei ASB Machine Co., Ltd., Komoro-shi, Nagano 384-8585 (JP)
(72) Inventor: NISHIO Yuta, Komoro-Shi, Nagano 384-8585 (JP)
(74) Representative: Mewburn Ellis LLP
(86) International application number: PCT/JP2024/001208
(87) International publication number: WO 2024/154768

(57) **Abstract**

A container conveyance apparatus includes: a first conveyance unit that intermittently conveys a predetermined number of blow-molded containers at a time; a second conveyance unit including an annular conveyance path and a plurality of container conveyance bodies that receives the containers from the first conveyance unit and travels on the conveyance path in a predetermined direction by a linear motor; and a third conveyance unit that sequentially receives the containers from the container conveyance bodies and rotationally conveys the containers. The second conveyance unit controls traveling of each of the container conveyance bodies by the linear motor, adjusts a conveyance interval of the containers during conveyance, and delivers the containers to the third conveyance unit.

## Description

### Technical Field

The present invention relates to a container conveyance apparatus, a container conveyance method, and a blow molding apparatus.

### Background Art

Conventionally, as one of blow molding apparatuses that blow-mold various containers from a resin preform, a linear machine that intermittently carries out a plurality of containers at once has been known. On the other hand, the blow-molded containers are continuously conveyed one by one in a subsequent process, and each of the containers is sequentially subjected to processing such as cleaning, filling, or sealing. Therefore, when the container is delivered from the blow molding apparatus of this type of linear machine to the subsequent process, it is necessary to adjust a carry-out pitch, a speed, and the like of the container during conveyance.

For example, Patent Literature 1 proposes a container conveyance system that delivers a container carried out from a blow molding apparatus of a linear machine to a star wheel. In addition, for example, Patent Literature 2 proposes an article delivery apparatus that adjusts a conveyance interval of containers on a conveyor traveling in parallel with a linear motor by an engaging unit that circulates by the linear motor and delivers the containers to a star wheel.

### Citation List

### Patent Literature

Patent Literature 1: JP 6998886 B2
Patent Literature 2: JP 5825485 B2

### Summary of Invention

### Technical Problem

In this type of container conveyance apparatus, it is necessary to change a pitch of the container such that the number of carry-out containers to be manufactured by a linear machine for one time and a carry-out interval of the containers are synchronized with a rotation speed of a star wheel and a container conveyance position. However, in the container conveyance apparatus of Patent Literature 1, an adjustment operation when any condition is changed due to a change in a container to be manufactured is very complicated.

In addition, in the case of the article delivery apparatus of Patent Literature 2, since an apparatus configuration for driving an engaging unit in addition to the conveyor is required, an occupied space of the container conveyance apparatus is large.

Therefore, the present invention has been made in view of such problems, and an object thereof is to provide a container conveyance apparatus capable of relatively easily adjusting a conveyance interval of containers and suppressing an occupied space of the apparatus.

### Solution to Problem

A container conveyance apparatus according to an aspect of the present invention includes: a first conveyance unit that intermittently conveys a predetermined number of blow-molded containers at a time; a second conveyance unit including an annular conveyance path and a plurality of container conveyance bodies that receives the containers from the first conveyance unit and travels on the conveyance path in a predetermined direction by a linear motor; and a third conveyance unit that sequentially receives the containers from the container conveyance bodies and rotationally conveys the containers. The second conveyance unit controls traveling of each of the container conveyance bodies by the linear motor, adjusts a conveyance interval of the containers during conveyance, and delivers the containers to the third conveyance unit.

### Advantageous Effects of Invention

According to an aspect of the present invention, it is possible to provide a container conveyance apparatus capable of relatively easily adjusting a conveyance interval of containers and suppressing an occupied space of the apparatus.

### Brief Description of Drawings

Fig. 1 is a plan view illustrating a configuration example of a container conveyance apparatus of the present embodiment.
Fig. 2 is a side view illustrating a configuration example of the container conveyance apparatus of the present embodiment.
Fig. 3 is a schematic view illustrating delivery of a container at a container takeout unit.
Fig. 4 is an enlarged plan view of a container conveyance body of a second conveyance unit.
Fig. 5 is a side view of the container conveyance body.
Fig. 6 is a view illustrating a state of a container B conveyed by the container conveyance body.
Fig. 7 is a view following Fig. 6.

### Description of Embodiments

Hereinafter, an embodiment of the present invention will be described with reference to the drawings.

In the embodiment, for easy understanding, structures and elements of parts other than a main part of the present invention will be described in a simplified or omitted manner. In the drawings, the same elements are denoted by the same reference numerals. Note that the shapes, dimensions, and the like of elements illustrated in the drawings are schematically illustrated, and do not indicate actual shapes, dimensions, and the like.

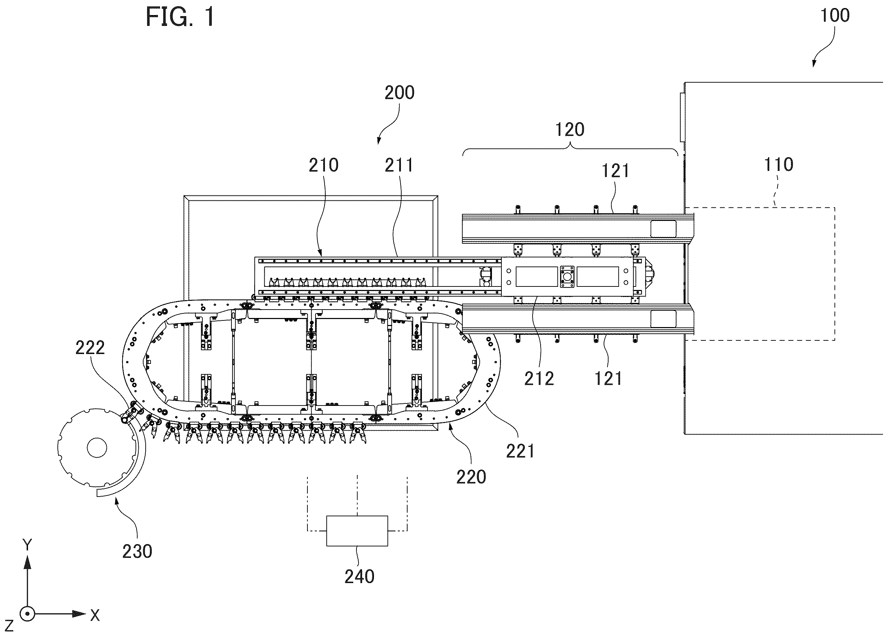

In the drawings, an XYZ coordinate system is appropriately illustrated as a three-dimensional orthogonal coordinate system. In the XYZ coordinate system, the X direction corresponds to a left-right direction in Fig. 1. The Y direction is a direction orthogonal to the X direction and corresponds to a vertical direction in Fig. 1. The Z direction is a direction orthogonal to the X direction and the Y direction and corresponds to a direction perpendicular to a paper surface in Fig. 1.

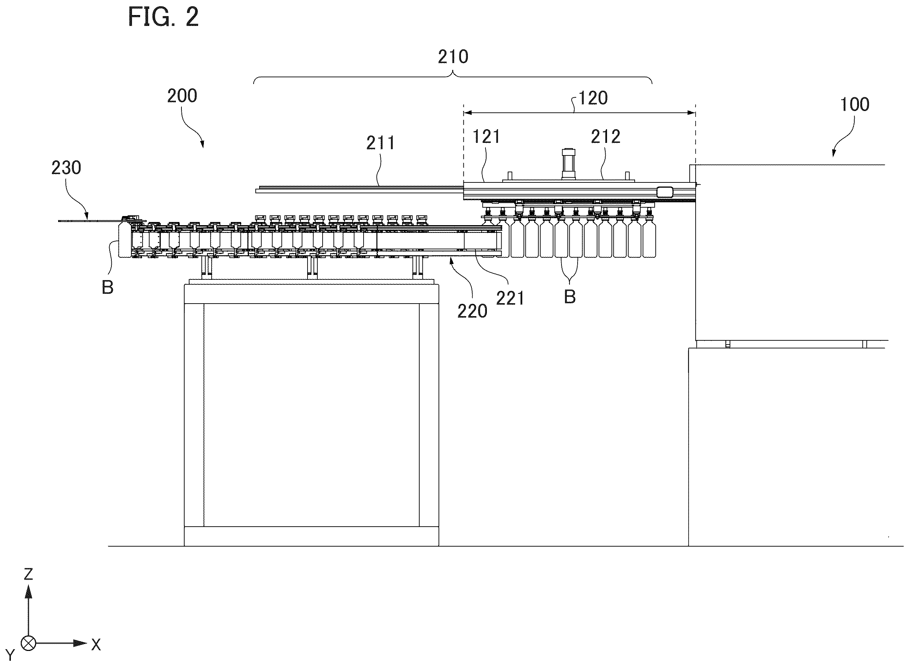

Fig. 1 is a plan view illustrating a configuration example of a container conveyance apparatus 200 of the present embodiment. Fig. 2 is a side view illustrating a configuration example of the container conveyance apparatus 200 of the present embodiment.

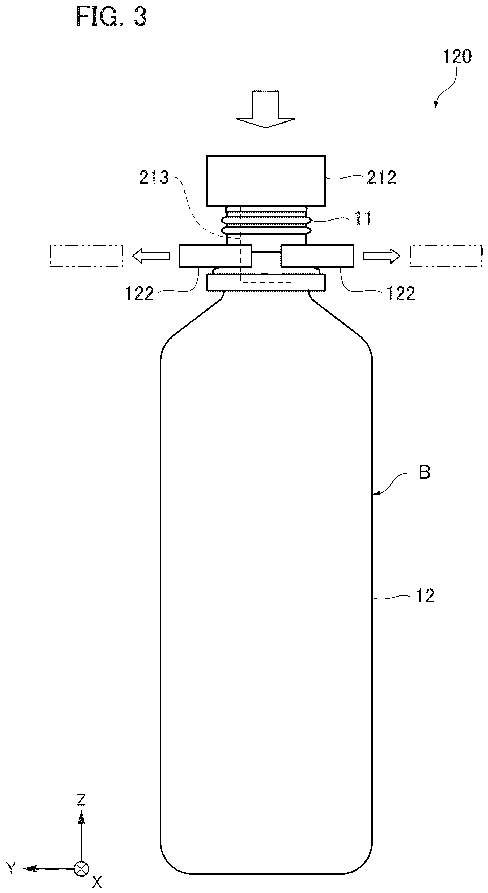

The container conveyance apparatus 200 of the present embodiment is disposed at a subsequent stage of a blow molding apparatus 100 of a container B. The blow molding apparatus 100 injection-molds a bottomed cylindrical preform (not illustrated) using a resin material, and blow-molds the preform to manufacture the container B. Note that, as illustrated in Fig. 3 described later, the container B has a neck portion 11 having an opening on an upper side, and a cylindrical main body portion 12 connected to the neck portion 11.

A material of each of the container B and the preform is a thermoplastic synthetic resin, and can be appropriately selected according to an application of the container B. Specific examples of the type of the material include PET (polyethylene terephthalate), PEN (polyethylene naphthalate), PCTA (polycyclohexanedimethylene terephthalate), Tritan (registered trademark, co-polyester manufactured by Eastman Chemical Co., Ltd.), PP (polypropylene), PE (polyethylene), PC (polycarbonate), PES (polyethersulfone), PPSU (polyphenylsulfone), PS (polystyrene), COP/COC (cyclic olefin-based polymer), PMMA (polymethyl methacrylate: acrylic), and PLA (polylactic acid).

The blow molding apparatus 100 of the present embodiment executes a blow molding method called a 1.5 stage method having both an advantage of a hot parison method and an advantage of a cold parison method in order to manufacture a container. In the blow molding method of the 1.5 stage method, a preform (not illustrated) having residual heat from injection molding is basically blow-molded to manufacture the container B similarly to the hot parison method (one-stage method).

A cycle of the blow molding in the 1.5 stage method is set to be shorter than a cycle of the injection molding of the preform. A plurality of preforms molded in one injection molding cycle are blow-molded in a plurality of blow molding cycles. Although not particularly limited, a ratio (N : M) between the number (N) of preforms simultaneously injection-molded and the number (M) of containers simultaneously blow-molded is set to, for example, 3 : 1.

As an example, the blow molding apparatus 100 includes an injection molding unit (not illustrated) that injection-molds a preform, a cooling unit (not illustrated) that cools the preform molded by the injection molding unit, a heating unit (not illustrated), and a blow molding unit 110. In addition, the blow molding apparatus 100 includes: a continuous conveyance unit (not illustrated) that sequentially conveys the preform to the cooling unit and the heating unit; and an intermittent conveyance unit that intermittently conveys the preform and the container B to the blow molding unit 110 and a container takeout unit 120. In the continuous conveyance unit, the preform stored in the cooling unit is conveyed via the heating unit and delivered to the intermittent conveyance unit.

The intermittent conveyance unit includes a conveyance chuck 122 that moves in a predetermined direction (X direction) along a pair of linear guide plates 121. The conveyance chuck 122 is disposed below the guide plates 121, and grips the preform or the neck portion 11 of the container B in an upright state by sandwiching the preform or the neck portion 11 from both sides in the Y direction (see Fig. 3).

The intermittent conveyance unit intermittently conveys a predetermined number of preforms received from the continuous conveyance unit to the blow molding unit 110 at regular intervals. In the blow molding unit 110, the preform gripped by the conveyance chuck (not illustrated) is subjected to stretch blow molding, whereby the preform is shaped into the container B. In addition, the container B manufactured by the blow molding unit 110 is carried out by the conveyance chuck 122 to the container takeout unit 120 on a side opposite to a delivery position (not illustrated) from the continuous conveyance unit and delivered to the container conveyance apparatus 200.

As illustrated in Figs. 1 and 2, the container conveyance apparatus 200 includes a first conveyance unit 210, a second conveyance unit 220, and a third conveyance unit 230 in this order from an upstream side. Operations of the units of the container conveyance apparatus 200 are integrally controlled by a control unit 240 which is a control computer.

The first conveyance unit 210 is a conveyance apparatus including a linear guide plate 211 and a movable table 212. The first conveyance unit 210 receives the container B from the conveyance chuck 122 of the intermittent conveyance unit in the container takeout unit 210, and intermittently conveys a predetermined number of the containers B at a time to the second conveyance unit 220.

The guide plate 211 of the first conveyance unit 210 is disposed between the pair of guide plates 121 of the intermittent conveyance unit in parallel with the guide plates 121 and extends in the same X direction as the guide plates 121 of the intermittent conveyance unit. The guide plates 211 of the first conveyance unit 210 extend from the container takeout unit 120 to the position of the second conveyance unit 220 in the X direction. The movable table 212 is suspended below the guide plates 211 and reciprocates in the X direction along the guide plates 211.

Fig. 3 is a schematic view illustrating delivery of the container B at the container takeout unit 120.

The movable table 212 includes a plurality of mandrel chucks 213 arranged in a line in the X direction on a lower side. The mandrel chucks 213 are arranged at the same pitch as a gripping interval of the containers B of the conveyance chuck 122 in a longitudinal direction (X direction) of the movable table 212.

Each of the mandrel chucks 213 is inserted into a neck portion opening of the container B. The movable table 212 can hold the container B inside the opening by a holding operation of the mandrel chuck 213, and the movable table 212 can release the holding state of the container B by a holding releasing operation of the mandrel chuck 213.

The movable table 212 includes a lifting and lowering mechanism (not illustrated) and a feeding mechanism (not illustrated) that slides the mandrel chuck 213 in the Y direction so as to approach the second conveyance unit 220. The movable table 212 can insert the mandrel chuck 213 into the container B and can remove the mandrel chuck 213 from the container B by an operation of the lifting and lowering mechanism, and can bring the container B held by the mandrel chuck 213 close to the second conveyance unit 220 at a predetermined position by an operation of the feeding mechanism. Note that when the mandrel chuck 213 is brought close to the second conveyance unit 220, the container conveyance body 222 (described later) of the second conveyance unit 220 is preferably on standby (stationary) at a position facing the mandrel chuck 213.

The second conveyance unit 220 is a conveyance apparatus which is disposed between the first conveyance unit 210 and the third conveyance unit 230, and includes an oblong and annular conveyance path 221, and a plurality of container conveyance bodies 222.

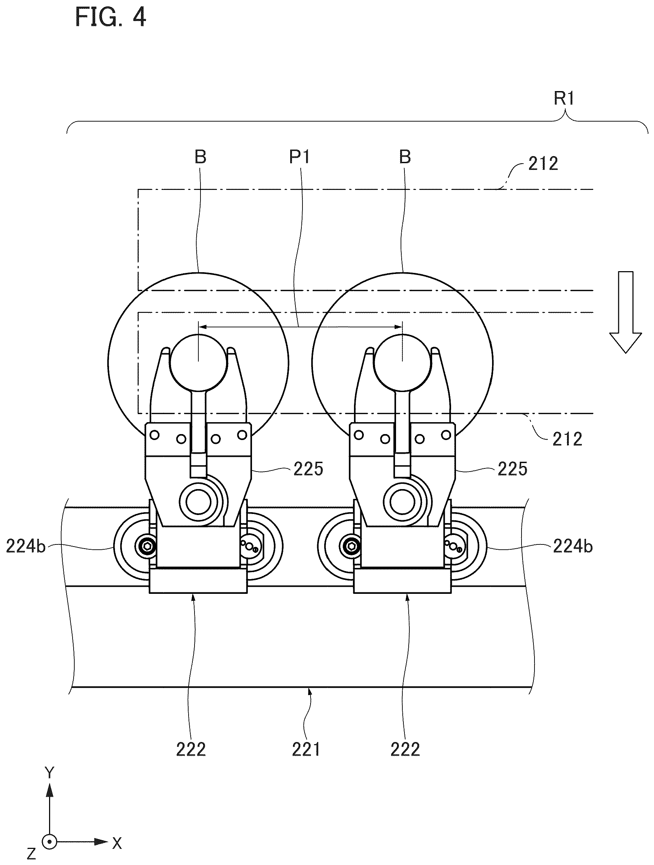

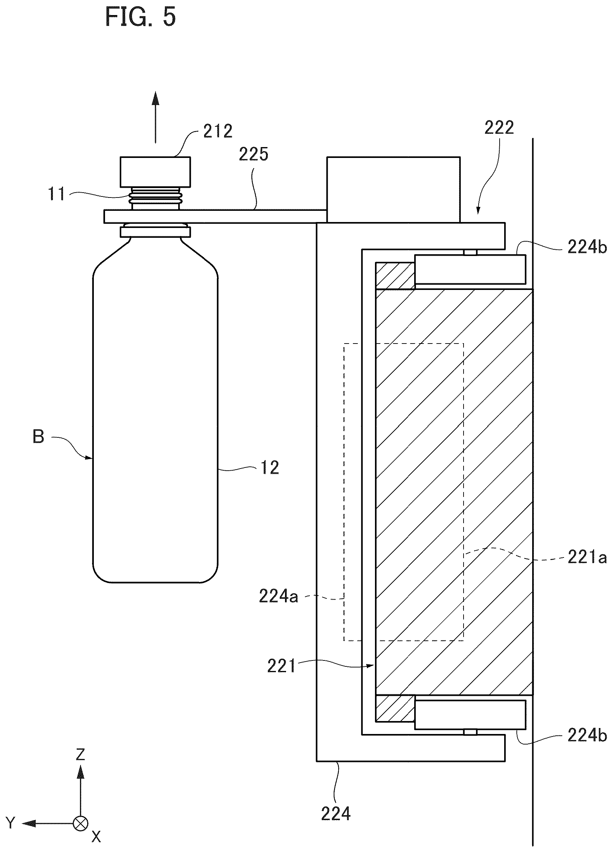

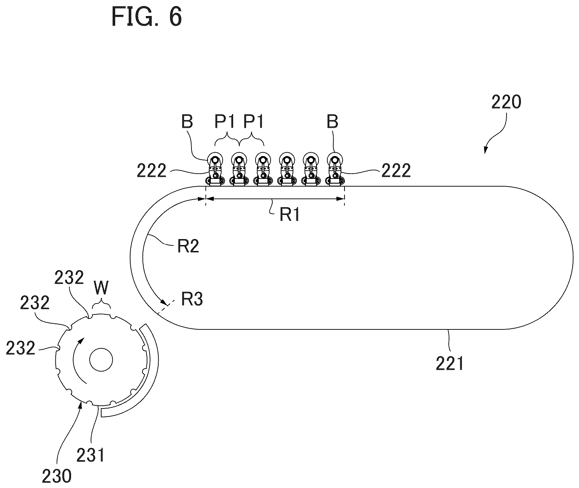

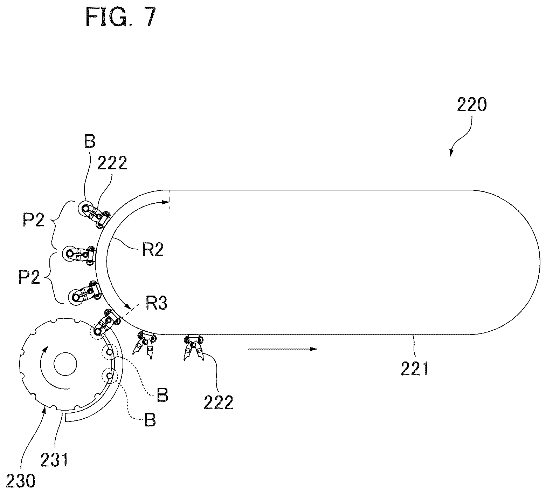

Fig. 4 is an enlarged plan view of the container conveyance body 222 of the second conveyance unit 220. Fig. 5 is a side view of the container conveyance body 222. Figs. 6 and 7 are views illustrating a state of the container B conveyed by the container conveyance body 222.

On the conveyance path 221 of the second conveyance unit 220, a plurality of primary-side electromagnetic coils 221a are arranged at predetermined intervals along an outer periphery. The container conveyance body 222 includes a wheeled platform 224 attached to an outer peripheral side of the conveyance path 221 and traveling along the conveyance path 221, and a gripper 225 attached to the wheeled platform 224. Note that, in the example of the present embodiment, the container conveyance body 222 travels counterclockwise on the conveyance path 221.

The wheeled platform 224 of the container conveyance body 222 has a plurality of wheels 224b arranged so as to vertically sandwich the conveyance path 221 therebetween. A secondary-side permanent magnet 223a constituting a linear motor together with the electromagnetic coils 221a of the conveyance path 221 is disposed on a surface of the wheeled platform 224 facing the outer periphery of the conveyance path 221. The control unit 240 can drive the wheeled platform 224 along the conveyance path 221 by controlling a current flowing through the primary-side electromagnetic coils 221a to generate an attractive force or a repulsive force with respect to the secondary-side permanent magnet 224a. In addition, the control unit 240 can adjust a moving timing and a moving speed of each of the container conveyance bodies 222 by controlling a current of the electromagnetic coils 221a.

The gripper 225 of the container conveyance body 222 is disposed on an upper side of the wheeled platform 224 so as to protrude to an outer peripheral side of the conveyance path 221. The gripper 225 is opened and closed by an actuator (not illustrated), and can grip the neck portion 11 of the container B when closed.

Here, the second conveyance unit 220 is disposed such that a linear portion on one side of the conveyance path 221 is aligned with the first conveyance unit 210. A part of the linear portion on one side in the conveyance path 221 is a first region R1 where the container B is received from the first conveyance unit 210. The third conveyance unit 230 is disposed on a downstream side of the conveyance path 221 with respect to the first region R1 so as to face a curved portion in front of a linear portion on the other side of the conveyance path 221. A portion of the conveyance path 221 facing the third conveyance unit is a delivery position R3 of the container B of the second conveyance unit. In addition, a region between the first region R1 and the delivery position R3 in the conveyance path 221 is a second region R2 where the container conveyance body 222 conveys the container B.

The third conveyance unit 230 is a star wheel that delivers the container B received from the second conveyance unit 220 to a subsequent process. The third conveyance unit 230 includes a disk-shaped rotating body 231 that rotates clockwise in synchronization with a moving speed of the container conveyance body 222.

On an outer peripheral portion of the rotating body 231, a recessed container support portion 232 that supports a lower side of the neck portion of the container B (so-called a lower side of a neck of the container) is formed. In the container support portion 232, the neck portion 11 of the container B is supported from below by being placed on the rotating body 231, and the container B is conveyed in a state of being suspended from the rotating body 231. The container support portions 232 are arranged at equal intervals with a width w in a circumferential direction of the rotating body 231.

Next, an operation of the container conveyance apparatus 200 of the present embodiment will be described.

The container B manufactured by the blow molding apparatus 100 is carried out to the container takeout unit 120 by the conveyance chuck 122.

In the container takeout unit 120, the movable table 212 of the first conveyance unit 210 is lowered by the lifting and lowering mechanism, and the mandrel chuck 213 is inserted into the neck portion opening of the container B. Thereafter, when each of the containers B is held by the movable table 212 by a holding operation of the mandrel chuck 213, the conveyance chuck 122 opens in the Y direction and retracts from the neck portion 11 of the container B. As a result, a predetermined number of the containers B are delivered from the conveyance chuck 122 to the first conveyance unit 210.

Next, the movable table 212 moves in the X direction from the container takeout unit 120. When the movable table 212 moves to the vicinity of the first region R1 of the second conveyance unit 220, the container B held by the mandrel chuck 213 is slid by the feeding mechanism in the Y direction so as to approach the second conveyance unit 220.

On the other hand, in the first region R1 of the conveyance path 221 of the second conveyance unit 220, the container conveyance bodies 222 corresponding to the number of containers B are on standby in advance. An interval P1 of the container conveyance bodies 222 on standby in the first region R1 is a dimension corresponding to the arrangement interval of the containers B of the movable table 212. All the grippers 225 of the container conveyance body 222 on standby in the first region R1 are open.

When the container B held by the mandrel chuck 213 approaches the second conveyance unit 220, the grippers 225 of the container conveyance body 222 are closed, and each of the grippers 225 grips the neck portion 11 of the container B. After a holding releasing operation of the mandrel chuck 213 is performed, the movable table 212 is raised by the lifting and lowering mechanism, and the mandrel chuck 213 retracts from the neck portion opening of the container B. As a result, the container B is delivered from the movable table 212 to the container conveyance body 222 of the second conveyance unit 220.

When the container B is delivered to the container conveyance body 222, each container conveyance body 222 sequentially travels counterclockwise in the second region R2 of the conveyance path 221. At this time, the control unit 240 controls a moving timing and a moving speed of each container conveyance body 222, and adjusts an interval P2 of the container conveyance bodies 222 traveling in the second region R2 according to an interval (width w) of the container support portions 232 of the rotating body 231 from the interval P1 at the time of standby. In addition, the control unit 240 synchronizes a traveling speed of the container conveyance body 222 with a rotation speed of the rotating body 231 of the third conveyance unit 230.

The container conveyance body 222 opens the gripper 225 at the delivery position R3 of the container B on the conveyance path 221, and releases gripping of the container B at a timing when the container B overlaps with the container support portion 232 of the third conveyance unit 230. Then, in the container support portion 232, the neck portion 11 of the container B is placed on an upper side of the rotating body 231, and the container B is suspended from the rotating body 231. As a result, the container B is delivered from the container conveyance body 222 to the third conveyance unit 230, and the container B is rotationally conveyed toward a subsequent process.

Hereinafter, operational effects of the present embodiment will be described.

The container conveyance apparatus 200 of the present embodiment includes: the first conveyance unit 210 that intermittently conveys a predetermined number of blow-molded containers B at a time; the second conveyance unit 220 including the annular conveyance path 221 and the plurality of container conveyance bodies 222 that receives the containers B from the first conveyance unit 210 and travels on the conveyance path 221 in a predetermined direction by a linear motor; and the third conveyance unit 230 that sequentially receives the containers B from the second conveyance unit 220 and rotationally conveys the containers B. The second conveyance unit 220 controls traveling of each of the container conveyance bodies 222 by the linear motor, adjusts a conveyance interval of the containers B during conveyance, and delivers the containers B to the third conveyance unit 230.

According to the present embodiment, the conveyance interval of the predetermined number of the containers B intermittently conveyed at a time by the first conveyance unit 210 is adjusted during conveyance by the container conveyance body 222 traveling by the linear motor in the second conveyance unit 220, and the containers B are delivered to the third conveyance unit 230. As a result, in the container conveyance apparatus 200, the container B intermittently conveyed from the blow molding apparatus 100 can be continuously carried out from the third conveyance unit 230 to a subsequent process at predetermined intervals. That is, according to the present embodiment, it is possible to suppress a gapped state in which the container B is not conveyed by the third conveyance unit 230.

In addition, a conveyance interval of the containers B in the container conveyance apparatus 200 can be individually adjusted by controlling the container conveyance body 222 traveling by the linear motor. For example, even when the number of carry-out containers B for one time, a carry-out interval of the containers B, a rotation speed of the rotating plate 231, an interval of the container support portions 232, and the like are changed, in the present embodiment, the conveyance interval of the containers B can be easily adjusted by controlling traveling of the container conveyance body 222 by the linear motor without performing mechanical part replacement or the like.

In addition, the second conveyance unit 220 of the present embodiment also serves as a conveyance unit and an interval adjustment unit for the container B. Therefore, for example, as compared with a case where a plurality of apparatuses has these functions like a combination of a conveyor and a timing screw, the apparatus can be downsized, and a space occupied by the container conveyance apparatus 200 can be suppressed.

The present invention is not limited to the above embodiment, and various improvements and design changes may be made without departing from the gist of the present invention.

For example, in the above embodiment, the configuration example of the container conveyance apparatus 200 applied to the 1.5 step method blow molding apparatus 100 has been described as an example. However, the container conveyance apparatus of the present embodiment may be applied to a cold parison method (two-step method) blow molding apparatus that performs blow molding using a preform cooled to normal temperature after injection molding.

In addition, in the above embodiment, an example has been described in which the first conveyance unit 210 carries out the container B from the container takeout unit 120. However, the container conveyance apparatus of the present embodiment may intermittently convey a predetermined number of the containers B at a time from the blow molding unit of the blow molding apparatus. In this case, a system including the blow molding apparatus and the container conveyance apparatus can be further space-saved.

In addition, the embodiment disclosed herein is to be considered in all respects as illustrative and not restrictive. The scope of the present invention is indicated not by the above description but by the claims, and is intended to include meanings equivalent to the claims and all modifications within the scope.

### Reference Signs List

- 100: Blow molding apparatus
- 110: Blow molding unit
- 120: Container takeout unit
- 200: Container conveyance apparatus
- 210: First conveyance unit
- 220: Second conveyance unit
- 221: Conveyance path
- 222: Container conveyance body
- 225: Gripper
- 230: Third conveyance unit

## Claims

1. A container conveyance apparatus comprising:
a first conveyance unit that intermittently conveys a predetermined number of blow-molded containers at a time;
a second conveyance unit including an annular conveyance path and a plurality of container conveyance bodies that receives the containers from the first conveyance unit and travels on the conveyance path in a predetermined direction by a linear motor; and
a third conveyance unit that sequentially receives the containers from the second conveyance unit and rotationally conveys the containers, wherein
the second conveyance unit controls traveling of each of the container conveyance bodies by the linear motor, adjusts a conveyance interval of the containers during conveyance, and delivers the containers to the third conveyance unit.

2. The container conveyance apparatus according to claim 1, wherein
the first conveyance unit intermittently conveys a predetermined number of the containers at a time from a blow molding unit or a container takeout unit of a blow molding apparatus that manufactures the containers.

3. The container conveyance apparatus according to claim 2, wherein
the first conveyance unit includes a mandrel chuck that is inserted into an opening of the container and holds the container,
each of the container conveyance bodies includes a gripper that grips a neck portion of the container, and
the third conveyance unit includes a container support portion that supports the neck portion of the container from below.

4. A blow molding apparatus comprising:
the container conveyance apparatus according to any one of claims 1 to 3; and
a blow molding unit that blow-molds the container.

5. A container conveyance method comprising:
a first conveyance step of intermittently conveying a predetermined number of blow-molded containers at a time;
a second conveyance step of receiving the containers from the first conveyance step and conveying the containers with a plurality of container conveyance bodies traveling on an annular conveyance path in a predetermined direction by a linear motor; and
a third conveyance step of sequentially receiving the containers from the second conveyance step and rotationally conveying the containers, wherein
in the second conveyance step, traveling of each of the container conveyance bodies is controlled by the linear motor, a conveyance interval of the containers is adjusted during conveyance, and the containers are delivered to the third conveyance step.
